# EUROPEAN PATENT APPLICATION

(11) **EP 2 236 019 A1**
(43) Date of publication of application: **06.10.2010**
(21) Application number: 09157346.9
(22) Date of filing: 03.04.2009
(51) Int. Cl.: A01B 31/00

(54) **A ground levelling device**

(71) Applicant: Flynn, Trevor, Castlemaine, County Kerry (IE); Foley, John, Killarney, County Kerry (IE)
(72) Inventor: Flynn, Trevor, Castlemaine, County Kerry (IE); Foley, John, Killarney, County Kerry (IE)
(74) Representative: Roche, Dermot

(57) **Abstract**

A ground levelling device (1) suitable for use in agricultural work and/or horticultural work to level the contour of the ground and to create a seed bed comprises a front ground engaging element (2), two central ground engaging element (3, 4), a rear ground engaging element (5), and two side panels (9). The front ground engaging element (2) loosens part of the ground soil. The loosened part of the ground soil then passes over the front ground engaging element (2). The central ground engaging element (3, 4) holds part of the loosened ground soil to fill any holes in the ground. Any excess loosened ground soil passes over the central ground engaging element (3, 4). The rear ground engaging element (5) compresses part of the loosened ground soil against the ground. Any excess loosened ground soil passes over the rear ground engaging element (5). Each side panel (9) prevents any of the loosened ground soil from moving over the side of the device (1).

## Description

### Introduction

This invention relates to a ground levelling device.

### Statements of Invention

According to the invention there is provided a ground levelling device comprising one or more ground engaging elements, the one or more ground engaging elements being movable relative to the ground to level the contour of the ground.

In one embodiment of the invention the ground engaging element comprises means to loosen part of the ground material. In this manner the device acts to stir up the ground material and make the ground material fine. The device may thus be used to create a seed bed. Preferably the ground engaging element comprises means to raise a loosened part of the ground material. In this manner the device also acts to stir up the ground material and make the ground material fine. The device may thus be used to create a seed bed. Ideally at least part of the ground engaging element is inclined downwards in the direction of motion of the ground engaging element. Most preferably the angle of inclination of the ground engaging element is in the range of from 15 degrees to 75 degrees.

In another embodiment the device comprises a first ground engaging element and a second ground engaging element, the first ground engaging element extending lower than the second ground engaging element.

In another embodiment the device comprises an opening through which a loosened part of the ground material may pass. Preferably the opening is located above the ground engaging element. The opening may be located at the front of the device.
The opening may be located at the rear of the device. Ideally the height of the opening is at least 150 mm. Most preferably the height of the opening is at least 300 mm. The height of the opening may be at least 450 mm. Preferably the width of the opening is at least 500 mm. Ideally the width of the opening is at least 2000 mm. Most preferably the width of the opening is at least 3500 mm. The opening may extend transversely for substantially the full width of the device. The large size of the opening ensures that the ground material does not become clogged as the ground material passes through the opening.

In one case the ground engaging element comprises means to at least temporarily hold a loosened part of the ground material. If the device encounters a depression or hole in the ground as the device moves relative to the ground, at least some of the loosened part of the ground material may move into the depression or hole to fill the depression or hole. In this manner the device ensures that the contour of the ground is level. Preferably a concave part of the ground engaging element faces in the direction of motion of the ground engaging element.

In another case the ground engaging element comprises means to compress a loosened part of the ground material against the ground. In this manner the device ensures that the contour of the ground is level. Preferably at least part of the ground engaging element is inclined upwards in the direction of motion of the ground engaging element. Ideally a convex part of the ground engaging element faces in the direction of motion of the ground engaging element.

In one embodiment the longitudinal axis of the ground engaging element extends substantially transverse to the direction of motion of the ground engaging element.

In another embodiment the device comprises means to prevent a loosened part of the ground material from moving to the side of the device. Preferably the height of the prevention means is greater than the height of the ground engaging element. The height of the prevention means may be at least 50 mm. Preferably the height of the prevention means is at least 150 mm. Ideally the height of the prevention means is at least 250 mm. Most preferably the height of the prevention means is at least 350 mm. The height of the prevention means may be at least 450 mm. The ground engaging element may extend lower than the prevention means.

In one case the device comprises means to couple the device to a vehicle.

### Brief Description of the Drawings

The invention will be more clearly understood from the following description of some embodiments thereof, given by way of example only, with reference to the accompanying drawings, in which:
- Fig. 1: is an isometric view from the rear of a ground levelling device according to the invention,
- Fig. 2: is an isometric view from the front of the ground levelling device of Fig. 1,
- Fig. 3: is a side view of the ground levelling device of Fig. 1,
- Fig. 4: is another side view of the ground levelling device of Fig. 1,
- Fig. 5: is a side view of part of the ground levelling device of Fig. 4,
- Fig. 6: is an enlarged side view of part of the ground levelling device of Fig. 5,
- Fig. 7: is a plan view of the ground levelling device of Fig. 1,
- Fig. 8: is another plan view of the ground levelling device of Fig. 1,
- Fig. 9: is an isometric view from the rear of another ground levelling device according to the invention,
- Fig. 10: is an isometric view from the front of the ground levelling device of Fig. 9,
- Fig. 11: is a side view of the ground levelling device of Fig. 9,
- Fig. 12: is an enlarged side view of part of the ground levelling device of Fig. 11, and
- Fig. 13: is a plan view of the ground levelling device of Fig. 9.

### Detailed Description

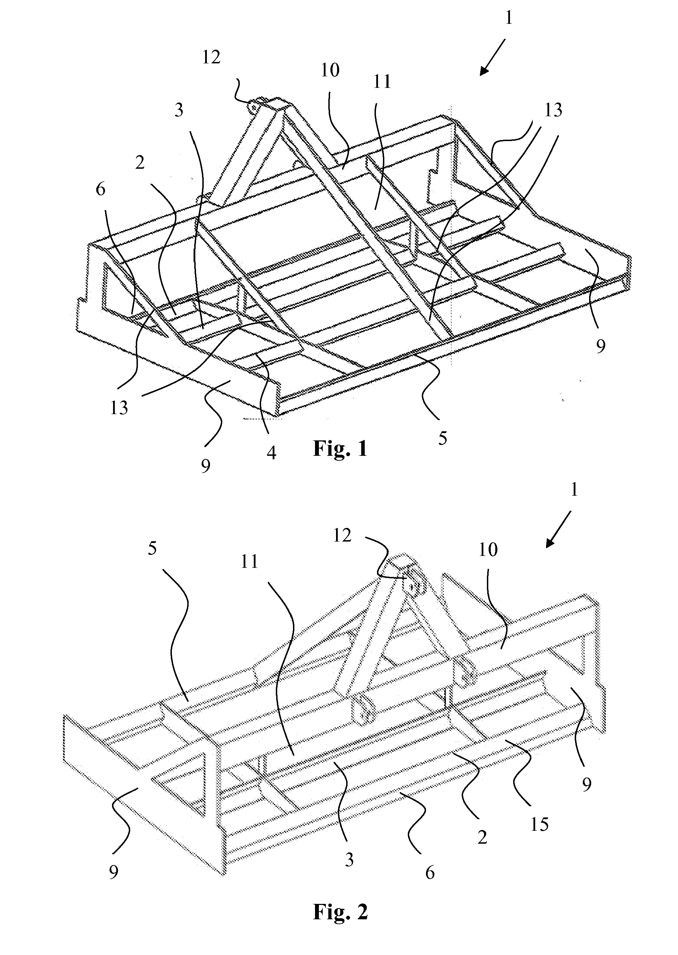

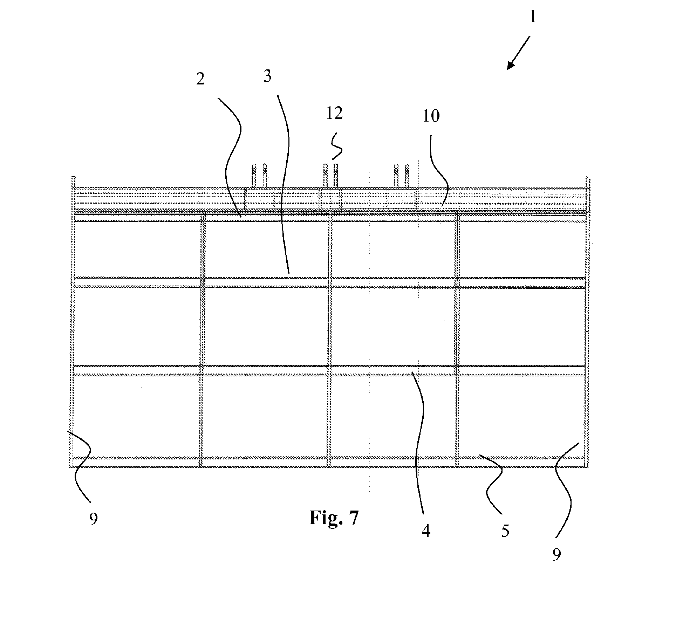

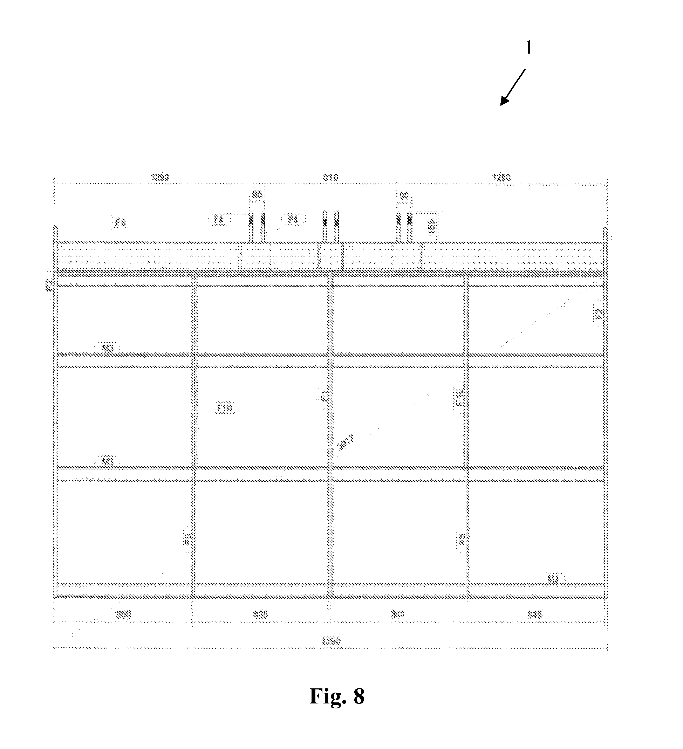

Referring to the drawings, and initially to Figs. 1 to 8 thereof, there is illustrated a ground levelling device 1 according to the invention. The ground levelling device 1 is suitable for use in agricultural work and/or horticultural work to level the contour of the ground and to create a seed bed.

The device 1 comprises a front elongate ground engaging element 2, two central elongate ground engaging element 3, 4, a rear elongate ground engaging element 5, two side panels 9, and a carrier frame 10.

The device 1 with the four ground engaging elements 2, 3, 4, 5 is movable relative to the ground to level the contour of the ground. The longitudinal axis of each ground engaging element 2, 3, 4, 5 extends transverse to the direction of motion of the ground engaging element 2, 3, 4, 5. Each ground engaging element 2, 3, 4, 5 is a rigid straight element.

The front ground engaging element 2 comprises a base support 15 and a blade 6. The blade 6 is securely attached to the base support 15, for example by means of welding.

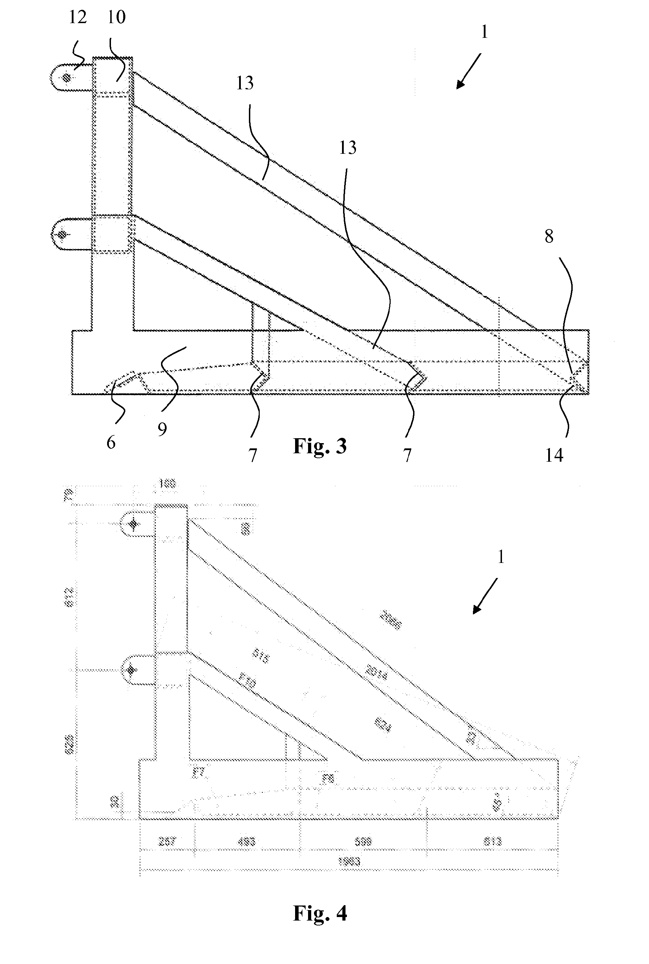

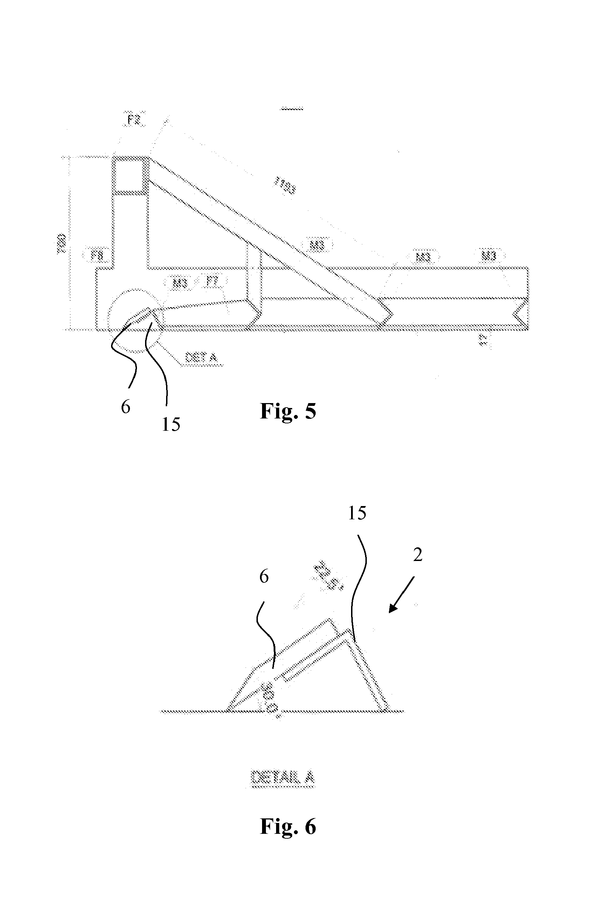

The blade 6 has an industrial strength cutting edge to cut into the ground soil to loosen part of the ground soil, and to raise the loosened part of the ground soil. The loosened part of the ground soil then passes over the blade 6. The blade 6 is inclined downwards in the direction of motion of the front ground engaging element 2 (Fig. 3). The angle of inclination of the blade 6 is in the range of from 15 degrees to 75 degrees, and in this case is 30 degrees (Fig. 6). The leading tip of the blade 6 is tapered to a point. The angle of the taper is 22.5 degrees in this case (Fig. 6). The thickness of the blade 6 is in the range from 12.7 mm (0.5 inch) to 38.1 mm (1.5 inch).

The central ground engaging element 3 adjacent to the front ground engaging element 2 comprises a concave part 7 to at least temporarily hold part of the loosened ground soil (Fig. 3) to fill any holes in the ground. The concave part 7 of the central ground engaging element 3 faces in the direction of motion of the central ground engaging element 3. Any excess loosened ground soil passes over the central ground engaging element 3.

Similarly the central ground engaging element 4 adjacent to the rear ground engaging element 5 comprises a concave part 7 to at least temporarily hold part of the loosened ground soil (Fig. 3) to fill any holes in the ground. The concave part 7 of the central ground engaging element 4 faces in the direction of motion of the central ground engaging element 4. Any excess loosened ground soil passes over the central ground engaging element 4.

The rear ground engaging element 5 comprises a convex part 8 to compress part of the loosened ground soil against the ground (Fig. 3). The convex part 8 of the rear ground engaging element 5 faces in the direction of motion of the rear ground engaging element 5. The lower section 14 of the convex part 8 is inclined upwards in the direction of motion of the rear ground engaging element 5. Any excess loosened ground soil passes over the rear ground engaging element 5.

The height of each side panel 9 is greater than the height of each ground engaging element 2, 3, 4, 5. In this manner each side panel 9 keeps the loosened ground soil within the device 1 and prevents any of the loosened ground soil from moving over the side of the device 1. It will be appreciated that each side panel 9 may be configured with any suitable height, for example 50 mm, or 150 mm, or 250 mm, or 350 mm, or 450 mm. In this case the height of each side panel 9 is approximately 250 mm.

An opening 11 is defined between the carrier frame 10 and the front ground engaging element 2 at the front of the device 1. The front opening 11 is located above the front ground engaging element 2. The front opening 11 extends transversely for the full width of the device 1 (Fig. 2). As the device 1 moves relative to the ground the loosened ground soil passes through the front opening 11. In this case the height of the front opening 11 is approximately 550 mm and the width of the front opening 11 is approximately 3390 mm. The clearance above the top of the front ground engaging element 2 prevents the loosened ground soil from becoming clogged up. In particular the flow of loosened ground soil through the device 1 is not restricted.

Each ground engaging element 2, 3, 4, 5 is securely attached to each side panel 9. The carrier frame 10 is also securely attached to each side panel 9. A plurality of brace arms 13 are provided connecting the carrier frame 10 to the side panels 9 and to the ground engaging element 3, 4, 5 to reinforce the structural integrity of the device 1.

The carrier frame 10 comprises an attachment point 12 to couple the device 1 to a vehicle such as a tractor.

The device 1 may be manufactured from any suitable material. For example the blade 6 of the front ground engaging element 2 may be manufactured from hardened steel. For example the base support 15 of the front ground engaging element 2, and/or the central ground engaging elements 3, 4, and/or the rear ground engaging element 5, and/or the side panels 9, and/or the carrier frame 10 may be manufactured from mild steel.

The device 1 may be manufactured with any suitable dimensions. Example dimensions are illustrated in Figs. 4 to 6 and 8.

In use, the carrier frame 10 is coupled to a tractor to move the device 1 with the four ground engaging elements 2, 3, 4, 5 relative to the ground.

The blade 6 of the front ground engaging element 2 cuts into the ground soil to loosen part of the ground soil. The loosened part of the ground soil then passes over the blade 6 through the front opening 11. The concave part 7 of the central ground engaging element 3 holds part of the loosened ground soil. If the device 1 encounters a depression or hole in the ground as the device 1 moves relative to the ground, at least some of the loosened ground soil falls out of the concave part 7 into the depression/hole to fill the depression/hole. Any excess loosened ground soil passes over the central ground engaging element 3. Similarly the concave part 7 of the central ground engaging element 4 holds part of the loosened ground soil. If the device 1 encounters a depression/hole in the ground as the device 1 moves relative to the ground, at least some of the loosened ground soil falls out of the concave part 7 into the depression/hole to fill the depression/hole. Any excess loosened ground soil passes over the central ground engaging element 4. The convex part 8 of the rear ground engaging element 5 compresses part of the loosened ground soil against the ground. Any excess loosened ground soil passes over the rear ground engaging element 5.

The combined action of the ground engaging elements 2, 3, 4, 5 loosens part of the ground soil, rolls the loosened ground soil, and makes the loosened ground soil fine to create a seed bed.

By means of a single movement across the ground, the device 1 both levels the ground and creates a seed bed.

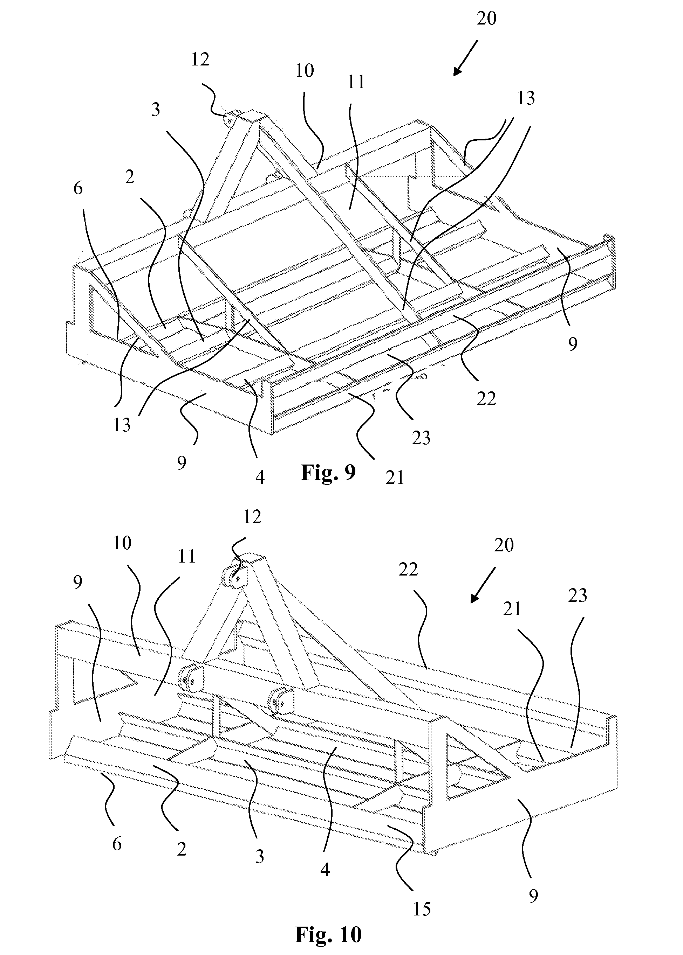

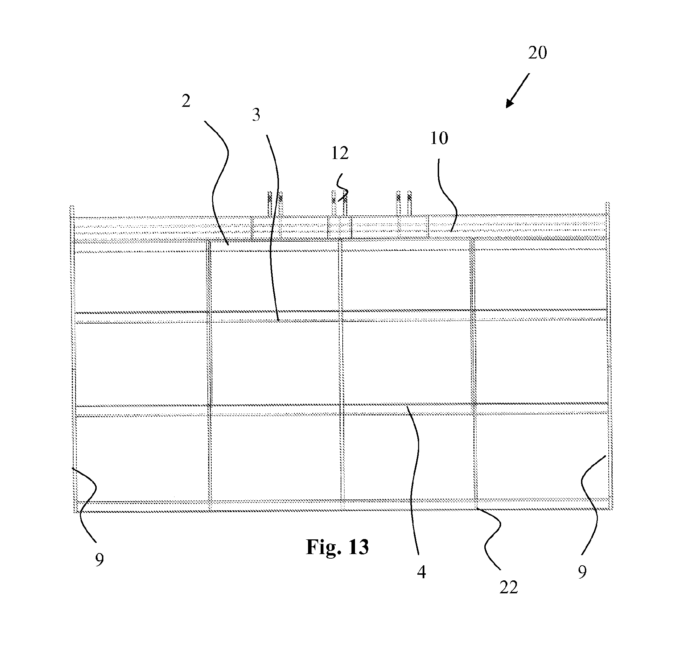

In Figs. 9 to 13 there is illustrated another ground levelling device 20 according to the invention, which is similar to the ground levelling device 1 of Figs. 1 to 8, and similar elements in Figs. 9 to 13 are assigned the same reference numerals.

In this case the device 20 comprises a raised elongate rear element 22. The longitudinal axis of the raised rear element 22 extends transverse to the direction of motion of the ground engaging element 2, 3, 4, 21. The raised rear element 22 is a rigid straight element. The raised rear element 22 is securely attached to each side panel 9.

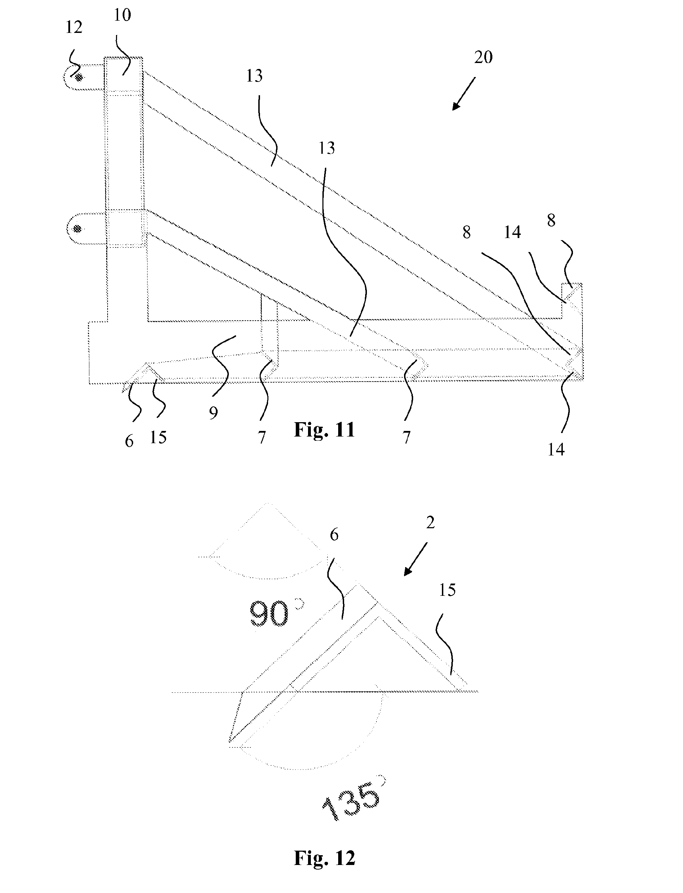

The raised rear element 22 comprises a convex part 8 (Fig. 11). The convex part 8 of the raised rear element 22 faces in the direction of motion of the rear ground engaging element 21. The lower section 14 of the convex part 8 is inclined upwards in the direction of motion of the rear ground engaging element 21.

An opening 23 is defined between the rear ground engaging element 21 and the raised rear element 22 at the rear of the device 20. The rear opening 23 is located above the rear ground engaging element 21. The rear opening 23 extends transversely for the full width of the device 20 (Fig. 9). As the device 20 moves relative to the ground any excess loosened ground soil passes over the rear ground engaging element 21 through the rear opening 23. In this case the width of the rear opening 23 is approximately 3390 mm. The clearance above the top of the rear ground engaging element 21 prevents the loosened ground soil from becoming clogged up. In particular the flow of loosened ground soil through the device 20 is not restricted.

The blade 6 of the front ground engaging element 2 extends lower than each side panel 9, extends lower than the two central ground engaging element 3, 4, and extends lower than the rear ground engaging element 21 (Fig. 11). The angle of inclination of the blade 6 is 45 degrees in this case (Fig. 12).

The invention is not limited to the embodiments hereinbefore described, with reference to the accompanying drawings, which may be varied in construction and detail.

## Claims

1. A ground levelling device comprising one or more ground engaging elements, the one or more ground engaging elements being movable relative to the ground to level the contour of the ground.

2. A device as claimed in claim 1 wherein the ground engaging element comprises means to loosen part of the ground material.

3. A device as claimed in claim 1 or 2 wherein the ground engaging element comprises means to raise a loosened part of the ground material.

4. A device as claimed in claim 2 or 3 wherein at least part of the ground engaging element is inclined downwards in the direction of motion of the ground engaging element.

5. A device as claimed in any of claims 1 to 4 wherein the device comprises an opening through which a loosened part of the ground material may pass.

6. A device as claimed in claim 5 wherein the opening is located above the ground engaging element.

7. A device as claimed in claim 5 or 6 wherein the height of the opening is at least 150 mm.

8. A device as claimed in any of claims 5 to 7 wherein the width of the opening is at least 500 mm.

9. A device as claimed in any of claims 1 to 8 wherein the ground engaging element comprises means to at least temporarily hold a loosened part of the ground material.

10. A device as claimed in claim 9 wherein a concave part of the ground engaging element faces in the direction of motion of the ground engaging element.

11. A device as claimed in any of claims 1 to 10 wherein the ground engaging element comprises means to compress a loosened part of the ground material against the ground.

12. A device as claimed in claim 11 wherein at least part of the ground engaging element is inclined upwards in the direction of motion of the ground engaging element.

13. A device as claimed in claim 11 or 12 wherein a convex part of the ground engaging element faces in the direction of motion of the ground engaging element.

14. A device as claimed in any of claims 1 to 13 wherein the device comprises means to prevent a loosened part of the ground material from moving to the side of the device.

15. A device as claimed in claim 14 wherein the height of the prevention means is greater than the height of the ground engaging element.
